# EUROPÄISCHE PATENTANMELDUNG

(11) **EP 4 285 715 A1**
(43) Veröffentlichungstag der Anmeldung: **06.12.2023**
(21) Anmeldenummer: 23174411.1
(22) Anmeldetag: 22.05.2023
(51) Int. Cl.: A01J 25/13, A01J 25/12

(54) **KASSETTE ZUR AUFNAHME VON KÄSEFORMEN**

(30) Priorität: 02.06.2022 CH 6742022
(71) Anmelder: Kalt Maschinenbau AG, 9604 Lütisburg (CH)
(72) Erfinder: Müller, Marcel, 9500 Wil (CH)
(74) Vertreter: Frommhold, Joachim

(57) **Zusammenfassung**

Die Erfindung betrifft eine Kassette zur Aufnahme von Käseformen, wobei die Kassette (1) in einer Käsepresse anordenbar ist. Eine solche Käsepresse ist insbesondere eine Kassettenpresse zum Abpressen von Käserohmasse.

Die Kassette soll einen einfachen und raschen Austausch von Käseformen in der Kassette ermöglichen.

Sie umfasst dazu einen Rahmen (2), eine Tragstruktur, und ein, oberhalb einer Drehachse der Kassette oder auf einer Oberseite des Rahmens (2) angeordnetes und mit Öffnungen (4) versehenes Aufnahmeblech (3). Sie umfasst weiterhin eine, unterhalb der Drehachse angeordnete Führung (11).

Öffnungen (4) des Aufnahmeblechs (3) weisen je ein Fixierelement für eine Käseform (6) auf.

## Beschreibung

Die Erfindung betrifft eine Kassette zur Aufnahme von Käseformen, wobei die Kassette in einer Käsepresse anordenbar ist. Eine solche Käsepresse ist insbesondere eine Kassettenpresse zum Abpressen von Käserohmasse.

Eine Vorrichtung zur industriellen Herstellung von Käselaiben ist z. B. aus der EP-A-350777 bekannt. Diese umfasst eine Einschwemmpresse mit einer rechteckigen und oben offenen Wanne zur Aufnahme von Käseformen, ein Säulengestell zur Anordnung eines heb- und senkbaren Presskopfes und eines Verteilkopfes zur Zuführung und Dosierung der Käserohmasse in die Käseformen und einen, auf der Wanne verfahrbaren Portalwagen zur Führung des Verteilkopfes und zur Handhabung eines Wendemechanismus' für die Käseformen. Der Verteilkopf muss manuell bereitgestellt resp. gewechselt werden. Der Verteilkopf beinhaltet ein Zuführrohr vom Käsefertiger und ein waagerechtes Verteilrohr mit einer Anzahl an Dosierapparaten zur Dosierung der Käserohmasse in die Käseformen. Zusätzlich kann die dosierte Käserohmasse mit einem Balken oder Rakel in die Käseformen befördert werden.

Die Käserohmasse gelangt über ein Zuführrohr, dessen Enden am Kessel eines Käsefertigers bzw. am Verteilkopf angeschlossen sind, in den Verteilkopf und von da in die runden oder eckigen Formen, die in der Wanne der Kassettenpresse angeordnet sind.

Die EP-A-406899 zeigt eine Weiterbildung einer solchen Vorrichtung, bei der die Formen in Kassetten aufgenommen sind, die wiederum kompakt und reihenartig in der Wanne angeordnet sind.

Eine Weiterentwicklung der Zuführung mit einer Gelenkrohranordnung ist in der CH 715264 A2, die eine höhere Dosiergenauigkeit ermöglichen soll, offenbart. Die eigentliche Käseform kann dabei von einem topfförmigen Mantel mit einem Luftzufuhrkanal umgeben sein (EP 1269832 B1). Dadurch wird ein Luftkanal gebildet und durch die zugeführte Luft kann die an den Sieblöchern des Lochblechs der Form anhaftende Käsemasse nach dem Pressen von der Jerbseite gelöst werden.

Nach der EP-B-543185 ist ein Form- bzw. Pressdeckel über eine Kippeinrichtung mit dem Pressstempel verbindbar (selbstzentrierend), so dass infolge möglicher Kippbewegungen ein Ansaugen des Formdeckels an der Käsemasse vermieden wird. Die Form selbst ist rund oder viereckig und kann aus einem äusseren Behälter und einem inneren, gelochten Mantel bestehen.

Die BR 9300409 offenbart eine Käseform mit doppelter Wandung, die mit, an ihrem Boden kreuzenden, Rippen versehen ist.

In der US 3838955A ist eine Form zur Herstellung von Cheddar offenbart, die eine Käseform und einen Pressdeckel aufweist. Die Form und insbesondere der Pressdeckel sind massiv ausgeführt. Der Pressdeckel sowie der Boden der Form sind mit wenigen Löchern 5 zum Abfluss von Molke versehen.

Eine weitere Käseform mit einer perforierten Formwand aus Metall ist in der DE-B-1030612 offenbart. Diese Formwand weist an ihrer inneren Oberfläche gleichmässig verteilte, niedrige Erhöhungen und Vertiefungen bis ca.1 mm auf, die die Käserinde bei Entnahme des Käselaibs nicht beschädigen sollen, selbst wenn der Käse aus der Form geschlagen wird.

Eine solche Käseform mit perforierter Wandung kann nach DE-C-2823182 auch aus Kunststoff bestehen, an deren Innenseite zueinander parallele Riefen mit dreieckigem Querschnitt vorgesehen sind.

Bekannt ist weiterhin eine Käseform gemäss EP 2710889 A1, insbesondere zur Anordnung in einer Kassettenpresse, wobei ein Boden der Käseform bis in den Übergangsbereich der äusseren Mantelwand hinein mit einer Rippenstruktur versehen ist. Diese Käseform kann aus Metall oder Kunststoff, insbesondere jedoch aus einem rostfreien Stahl bestehen.

Den beschriebenen Käseformen ist gemeisam, dass der in ihr abgepresste Rohkäsemasse zum Ankleben an Mantelwand und Boden neigt.

Der Erfindung liegt nun die Aufgabe zugrunde, eine Kassette zur Aufnahme von Käseformen bereitzustellen, wobei die Kassette in einer Käsepresse anordenbar ist. Eine solche Käsepresse ist insbesondere eine Kassettenpresse zum Abpressen von Käserohmasse.

Die Kassette soll die Nachteile des Standes der Technik meiden und einen einfachen und raschen Austausch von Käseformen in der Kassette ermöglichen.

Die Aufgabe ist mit den Merkmalen des Patentanspruchs 1 gelöst. Erfindungsgemäss weist eine Kassette einen Rahmen, der eine Tragstruktur bildet, auf, der zudem bevorzugt ein, oberhalb einer Drehachse der Kassette oder auf einer Oberseite des Rahmens angeordnetes und mit Öffnungen versehenes Aufnahmeblech sowie eine, unterhalb der Drehachse angeordnete Führung für Käseformen umfasst.

Käseformen können dadurch einzeln eingesetzt und entnommen werden.

Bevorzugte Ausführungsformen sind in den abhängigen Ansprüchen offenbart. Bevorzugt besteht die Kassette resp. deren wesentlichen Bestandteile aus einem lebensmittelzugelassenen und korrosionsbeständigem Edelstahl.

Aufnahmeblech und Führung sind parallel zueinander angeordnet und weisen kreisrunde Öffnungen zur Aufnahme von zylindrischen Käseformen auf, die koaxial zueinander ausgerichtet sind.

Vorzugsweise ist jede Öffnung des Aufnahmeblechs mit einem Nocken versehen.

Eine erfindungsgemässe Käseform besteht aus einem gelochten Mantel und einem gelochten Boden sowie einem ungelochten, oberen, Randbereich, der mit einem Bajonettring mit einer Nut zum eindrehen in den Nocken versehen ist. Mantel und Boden sind innen oder rundherum mit Teflon beschichtet und bestehen bevorzugt ebenfalls aus Stahlblech.

Die Erfindung wird nachfolgend in einem Ausführungsbeispiel anhand einer Zeichnung näher beschrieben. In der Zeichnung zeigen die
Fig. 1: eine erfindungsgemässe Kassette mit Käseformen;
Fig. 2: ein Rahmen der Kassette nach Fig. 1;
Fig. 3: ein Detail des Rahmens nach Fig. 2;
Fig. 4: eine Käseform nach Fig. 1 und

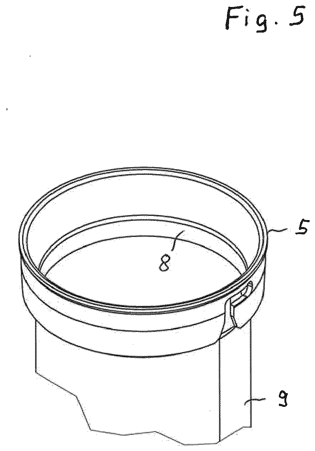

Fig. 5: Detailansicht der Käseform nach Fig. 3.

Eine erfindungsgemässe Kassette 1 kann zum Beispiel in einer Kassettenpresse (nicht dargestellt) gemäss EP 2710888 A1 der Anmelderin verwendet werden, wobei in bekannter Weise mehrere Kassetten 1 in einer solchen Kassettenpresse angeordnet sein können.

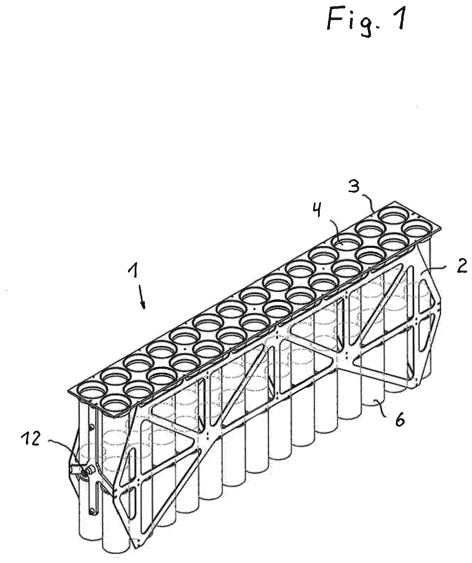

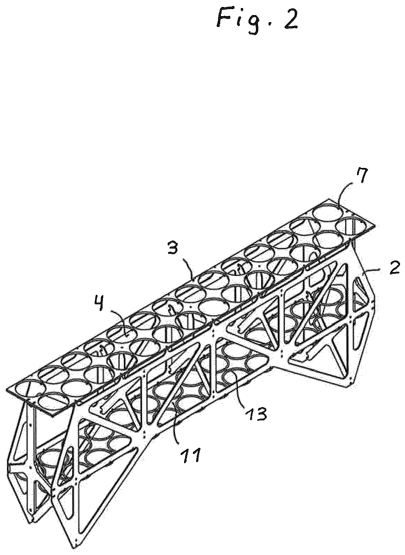

Die Kassette 1 umfasst einen Rahmen 2 aus Edelstahl, im Beispiel als eine geschweisste Tragstruktur (Fig. 1, 2). An den Schmalseiten der Kassette 1 sind, in Verlängerung einer Drehachse der Kassette 1, Zapfen 12 für Greifer einer Verfahr- und Wendevorrichtung der Kassettenpresse angebracht.

Der Rahmen 2 umfasst weiterhin ein, mit Öffnungen 4 versehenes Aufnahmeblech 3 aus Edelstahl auf der Oberseite und oberhalb der Drehachse des Rahmens 2 auf. Beabstandet und parallel dazu ist eine Führung 11 angeordnet, im Beispiel unterhalb der Drehachse der Kassette 1.

Das Aufnahmeblech 3 bildet den oberen Abschluss des Rahmens 2 und ist als Aufnahme für zylindrische Käseformen 6 ausgebildet. Das Aufnahmeblech 3 weist dazu in Reihen angeordnete kreisrunde Öffnungen 4 auf, die mit einem Nocken 7 als Fixierelement für eine Käseform (6) versehen sind.

Die Führung 11 befindet sich innerhalb des Rahmens 2 und weist miteinander verschweisste Metallringe 13 auf, die eine, dem Aufnahmeblech 3 entsprechende, koaxiale Lochung (Durchmesser) aufweisen (Fig. 2). Dadurch sind die Käseformen 6 vertikal ausgerichtet in der Kassette 1 einsetzbar (Fig. 1). Der Durchmesser der Metallringe 13 der Führung 11 ist im Beispiel grösser als die der Öffnungen 4, um die Anordnung der Käseformen zu erleichtern.

Die Führung 11 kann auch in Form eines gelochten Bleches oder in anderer Ausführungsform ausgeführt sein. Ebenso könnte auch das Aufnahmeblech 3 nur aus, in einer Ebene verschweissten Metallringen gebildet sein.

Die Anordnung der Öffnungen 4 des Aufnahmeblechs 3 und der Metallringe der Führung 11 stimmen überein, achsgleich bzw. koaxial zueinander ausgerichtet.

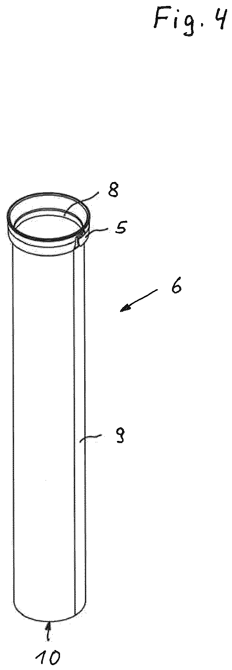

Die zylindrischen Käseformen 6 umfassen einen Mantel 9 und einen Boden 10 aus Lochblech sowie einen ungelochten, oberen, Randbereich 8, der mit einem Bajonettring 5 zum Fixieren der Käseform 6 in einer Öffnung 4 des Aufnahmeblechs 3 versehen ist (Fig. 4). Die Käseform 6 ist im Beispiel aus Edelstahl gefertigt.

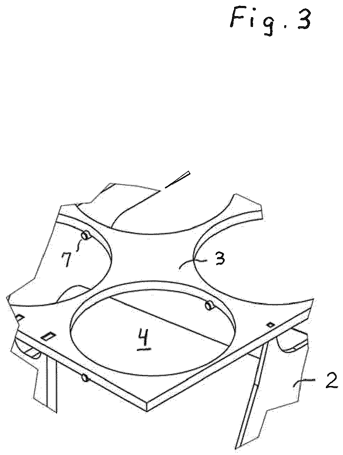

Der Bajonettring 5 wird zur Anordnung der Käseform 6 in der Kasette 1 zum Nocken 7 hin verdreht (Fig. 3), eine Nut des Bajonettrings 5 nimmt den Nocken 7 auf.

Mantel 9 und Boden 10 sind innen oder rundherum (innen und aussen) mit Teflon beschichtet, um ein ankleben von Käse am Lochblech zu verhindern. Die Teflonschicht muss nach längerer Betriebszeit der Käseform erneuert werden. Anstelle von Lochblech aus Stahl könnten auch Conidurbleche oder gelochte Kunststoffelemente verwendet werden, wobei die Wärmeübertragung von Stahlblech jedoch besser ist.

Die Käseform 6 kann in üblicher Weise mittels Bajonettring 5 und Nocken 7 in die Öffnung 4 eingedreht werden, so dass die Käseform 6 für das Einfüllen und Abpressen von Käserohmasse in ihrer Position in der Kassette 1 fixierbar ist. Der Bajonettring 5 kann alternativ auch in der Öffnung 4 und der Nocken 7 im Randbereich 8 der Käseform 6 vorgesehen sein.

Die Käseformen 6 können einzeln eingesetzt und entnommen werden.

### Bezugszeichen

1 Kassette
2 Rahmen
3 Aufnahmeblech
4 Öffnung
5 Bajonettring
6 Käseform
7 Nocken
8 Randbereich
9 Mantel
10 Boden
11 Führung
12 Zapfen
13 Metallring

## Patentansprüche

1. Kassette zur Aufnahme von Käseformen, wobei die Kassette (1) in einer Käsepresse anordenbar ist,
**dadurch gekennzeichnet, dass** sie einen Rahmen (2), eine Tragstruktur, und ein, oberhalb einer Drehachse der Kassette oder auf einer Oberseite des Rahmens (2) angeordnetes und mit Öffnungen (4) versehenes Aufnahmeblech (3) sowie eine, unterhalb der Drehachse angeordnete Führung (11) umfasst.

2. Kassette nach Anspruch 1, **dadurch gekennzeichnet, dass** die Führung (11) Öffnungen in Form von Ringen oder in Form eines gelochten Blechs aufweist.

3. Kassette nach Anspruch 1 oder 2, **dadurch gekennzeichnet, dass** die Öffnungen (4) des Aufnahmeblechs (3) zur Aufnahme von zylindrischen Käseformen (6) kreisrund und koaxial zur Führung (11) ausgerichtet sind.

4. Kassette nach einem der Ansprüche 1 bis 3, **dadurch gekennzeichnet, dass** jede Öffnung (4) des Aufnahmeblechs (3), mit einem Nocken (7) versehen ist.

5. Kassette nach einem der Ansprüche 1 bis 4, **dadurch gekennzeichnet, dass** die Käseformen (6) einen gelochten Mantel (9) und einen gelochten Boden (10) sowie einen ungelochten, oberen, Randbereich (8), der mit einem Bajonettring (5) versehen ist, umfassen.

6. Kassette nach einem der Ansprüche 1 bis 5, **dadurch gekennzeichnet, dass** Mantel (9) und Boden (10) der Käseform (6) aus gelochtem Stahlblech, insbesondere aus einem Edelstahl, bestehen und innen oder rundherum mit Teflon beschichtet sind.

7. Kassette nach einem der Ansprüche 1 bis 6, **dadurch gekennzeichnet, dass** sie aus Edelstahl besteht.

8. Käseform zum Abpresse von Käserohmasse, insbesondere in einer Kassettenpresse, **dadurch gekennzeichnet, dass** sie einen gelochten Mantel (9) und einen gelochten Boden (10) sowie einen ungelochten, oberen, Randbereich (8), der mit einem Bajonettring (5) versehen ist, umfasst.

9. Käseform nach Anspruch 8, **dadurch gekennzeichnet, dass** Mantel (9) und Boden (10) aus gelochtem Stahlblech bestehen und innen oder rundherum mit Teflon beschichtet sind.
